# EUROPÄISCHE PATENTANMELDUNG

(11) **EP 3 082 092 A1**
(43) Veröffentlichungstag der Anmeldung: **19.10.2016**
(21) Anmeldenummer: 16164355.6
(22) Anmeldetag: 08.04.2016
(51) Int. Cl.: G06Q 30/02, G09F 21/04

(54) **ANZEIGEFLÄCHE FÜR EIN FAHRZEUG UND FÜR UNBEWEGTE STANDORTE**

(30) Priorität: 17.04.2015 AT 500632015
(71) Anmelder: Lechner, Martin, 8232 Grafendorf (AT); Lion Beratungs- und beteiligungs GmbH, 8054 Seiersberg-Pirka (AT); AFK GmbH, 8253 Waldbach (AT)
(72) Erfinder: LECHNER, Martin, 8232 Grafendorf (AT); KRÖPFL, Wolfgang, 8054 Seiersberg-Pirka (AT); KRAUSE, Franz, 8253 Waldbach (AT)
(74) Vertreter: Schwarz & Partner

(57) **Zusammenfassung**

Vorrichtung (1) zur Ermittlung der Weitergabe von Basisinformationen, umfassend eine Anzeigefläche für Basisinformationen mit mindestens einem auf E-Paper basierenden Display (2), eine Funkverbindungseinheit (3), wobei die Vorrichtung (1) auf Fahrzeugen (9) und/oder Fahrzeuganhängern (10) befestigbar ist, wobei die Vorrichtung (1) mindestens eine Kamera (4) zum Ermitteln einer Bildinformation umfasst.

## Beschreibung

Die Erfindung betrifft eine Vorrichtung zur Ermittlung der Weitergabe von Basisinformationen, umfassend eine Anzeigefläche für Basisinformationen mit mindestens einem auf vorzugsweise E-Paper basierenden Display, eine Funkverbindungseinheit, wobei die Vorrichtung an Fahrzeugen und/oder Fahrzeuganhängern und/oder anderen unbewegten Standorten vorzugsweise Gebäuden oder eigens für die Vorrichtung errichteten Befestigungsvorrichtungen befestigbar ist.

DE 20 2013 000 952 U1 offenbart eine fernsteuerbare Anzeige für Warnhinweise im Verkehr oder für Werbeinhalte auf der Rückseite von LKWs, die auf E-Papertechnik basiert. Das System umfasst ein GPS-Steuerungssignal und wird über eine Fernverbindung gesteuert. Das System erlaubt einen ortspezifischen Einsatz der Anzeigetafel, um Verkehrshinweise abzubilden oder verschiedenenartig ausgestaltete Werbemaßnahmen anzuzeigen. Die in DE 20 2013 000 952 U1 offenbarte Anzeigetafel ist in ihrer Flexibilität limitiert und verfügt nur über sehr wenige Funktionen.

Der Erfindung liegt die Aufgabe zugrunde, eine Vorrichtung bereitzustellen, die gegenüber vergleichbaren Vorrichtungen aus dem Stand der Technik verbessert ist.

Die Aufgabe wird durch den Gegenstand des Anspruchs 1 gelöst. Die erfindungsgemäße Vorrichtung löst diese Aufgabenstellung dadurch, dass die erfindungsgemäße Vorrichtung mindestens eine Kamera umfasst. Die mindestens eine Kamera bietet eine Vielzahl von Vorteilen gegenüber dem Stand der Technik. Sie erlaubt die Analyse des Umfeldes der erfindungsgemäßen Vorrichtung, um die auf dem Display des E-Papers angezeigten Basisinformationen sowohl auf das ermittelte Umfeld als auch auf ein eventuell vorhandenes Navigationssignal abzustimmen. Ferner erlaubt die Kamera es, die Zahl der durch die Basisinformationen erreichten Personen zu ermitteln. Die Kamera ermöglicht auch die Differenzierung der erreichten Personen etwa durch Aufteilung der Passanten/Fahrzeuginsassen nach Alter, Geschlecht und sozioökonomischen Aspekten, da die von der Kamera ermittelten Daten durch Auswertemittel nach den verschiedensten Kriterien auswertbar sind.

Auf dem Display der erfindungsgemäßen Vorrichtung werden verschiedene Formen von Basisinformationen angezeigt. Die Basisinformationen umfassen Werbung aller Art, wobei die Werbung sowohl reine Schrift als auch (bewegte) Werbelogos (Bildwerbung) als auch Mischungen von Wort- und (bewegter) Bildwerbung umfassen kann. Des Weiteren umfassen die Basisinformationen Nachrichten, Kurzinformationen wie Warnhinweise zum Verkehr oder vor Unwettern.

Die bei der erfindungsgemäßen Vorrichtung verwendeten E-Papergeräte umfassen ein Display zur Anzeige von Basisinformationen. Bei der erfindungsgemäßen Vorrichtung lassen sich alle Formen und Größen bekannter E-Papergeräte bzw. E-Paper-Displays einsetzen so, dass sämtliche bekannten Vorteile von E-Papertechnik wie der geringe Energieverbrauch, die geringe Umweltbelastung durch Vermeidung von Papierverbrauch oder die gute Sichtbarkeit des Dargestellten bei der erfindungsgemäßen Vorrichtung zum Tragen kommen. Die Anzeige des E-Papers kann schwarzweiß oder farbig sein, wobei sie auf flexible (gebogene) oder unflexible (flache) Flächen appliziert werden kann. Die Maße des E-Papergeräts sind nicht beschränkt. Bevorzugte Ausführen des E-Papergeräts weisen eine Breite von 0,8m bis 5m auf. Besonders bevorzugte Breitenmaße sind 1,2m bis 3m. Bevorzugte Längenmaße sind 0,8m bis 2,5m, wobei besonders bevorzugte Ausführungsformen Längenmaße von 1m bis 2m aufweisen. Die Anzeige des E-Papergeräts kann kompartimentiert beziehungsweise unterteilt sein. Bevorzugte Ausführungsformen weisen zwei bis vier Kompartimente auf. Die Kompartimente erlauben es, verschiedene Basisinformationen anzuzeigen.

Natürlich ist für eine erfindungsgemäße Ausführung der Vorrichtung auch jede andere bekannte, schwarzweiße oder farbige, biegsame und/oder nicht-biegsame, elektronisch ansteuerbare Displaytechnologie, wie zum Beispiel Flüssigkristall-basierte (Englisch: "Liquid Crystal Display", LCD) Displaytechnologie, LED-, OLED- und AMOLED-basierte (Englisch: "Active Matrix Organic Light Emitting Diode") Displaytechnologie, DLPbasierte (Englisch: "Digital Light Processing") Displaytechnologie, Phasenwechselmaterialbasierte Displaytechnologie (Englisch: "Phase Change Material", PCM), IMD-basierte (Englisch: "Interferometric modulator display") Displaytechnologie, anwendbar. Auch können in Zukunft entwickelte die E-Papertechnologie ablösende Technologien von Displays zur Anwendung kommen.

Für die erfindungsgemäße Vorrichtung eignen sich verschiedenste Kameratypen, die vorzugsweise statische und/oder bewegte Bilder aufnehmen. In besonderen Ausführungsformen werden auch Kameras mit einer Infrarotfunktion eingesetzt, um zuverlässig die Zahl von Fahrzeuginsassen zu bestimmen, die sich in der Nähe der erfindungsgemäßen Vorrichtung befinden.

Die Kamera der erfindungsgemäßen Vorrichtung detektiert vorzugsweise Fahrzeuge und/oder Passanten und/oder andere Verkehrsteilnehmer im Bereich von 1m bis 50m Entfernung zu der erfindungsgemäßen Vorrichtung. Alternative Ausführungsformen detektieren im Bereich von 1m bis 30m Entfernung zu der erfindungsgemäßen Vorrichtung, weitere Ausführungsformen im Bereich von 1m bis 20m Entfernung zu der erfindungsgemäßen Vorrichtung.

Weitere alternative Ausführungsformen umfassen zwei, drei, vier oder mehr Kameras, um die Genauigkeit der Datenerfassung zu erhöhen und/oder um die Datenerfassung im Seitenbereich der erfindungsgemäßen Vorrichtung von der Erfassung der Daten im rückwärtigen Bereich zu separieren, wobei in diesen Fällen die Erfassungswinkel dementsprechend geringer als 180 Grad sind. Die Begriffe "seitlich" und "rückwärtig" beziehen sich auf die Fahrtrichtung des Fahrzeugs bzw. Fahrzeuganhängers, auf dem die erfindungsgemäße Vorrichtung montiert ist.

In besonderen Ausführungsformen ist die Kamera der erfindungsgemäßen Vorrichtung drehbar, um zur Verbesserung der Datenerfassung eine optimierte Position einzunehmen. Wenn sich beispielsweise die erfindungsgemäße Vorrichtung auf einem Bus befindet, der auf einer Busspur fährt, wird der Fokus der Kamera auf eine benachbarte Fahrspur gelenkt, weil der Bereich direkt hinter dem Bus für die Datenerfassung von geringer Relevanz ist.

Alternative Ausführungsformen umfassen Kameras, die exponiert angebracht sind, um den Seitenbereich und rückwärtigen Bereich der Detektion der Kamera besser zugänglich zu machen. Die exponierte Position beruht darauf, dass die Kamera etwa auf dem Dach des Fahrzeugs oder des Anhängers angebracht ist. Alternativ kann die Kamera auch auf einem Stab montiert sein, der zu einer exponierten Position der Kamera führt. Der Stab, auf dem die Vorrichtung befestigt ist, kann beispielsweise eine Länge von 80cm aufweisen. Bevorzugte Ausführungsformen erfassen das horizontale Umfeld mit einem Winkel von mindestens 180 Grad, alternative Ausführungsformen mit einem Winkel von mindestens 270 Grad und weitere Ausführungsformen mit einem Winkel von 360 Grad.

Die Navigationseinheit ist vorzugsweise GPS-basiert und/oder Galileo-basiert und/oder basierend auf einem vergleichbaren Navigationsprogramm. Sie sendet ein Navigationssignal an die Auswertemittel. Die Auswertemittel vergleichen z.B. ein GPS-Signal mit abgespeicherten Daten. Wenn beispielsweise ein GPS-Signal eine Übereinstimmung mit den abgespeicherten Daten aufweist, wird eine Basisinformation durch das E-Papergerät angezeigt, die für das GPS-Signal spezifisch ist. Bei alternativen Ausführungsformen ruft ein spezifisches GPS-Signal die Verhinderung des Anzeigens einer bestimmten Basisinformation hervor, so dass andere Basisinformationen angezeigt werden.

Besondere Ausführungsformen der erfindungsgemäßen Vorrichtung umfassen ein Solarmodul, wobei dieses Solarmodul als semi-transparente Folie über dem Display und/oder als Umrahmung der Anzeige und/oder als eigenständige Einheit an jeder beliebeigen Position am Fahrzeug und/oder dem Fahrzeuganhänger und/oder dem unbewegten Standort, vorzugsweise an einem Gebäude oder eigens an den eigens für die Vorrichtung errichteten Befestigungsvorrichtungen, ausgeführt ist. Das Solarmodul ist vorzugsweise so leistungsstark, dass für das E-Paper keine weitere Energiequelle notwendig ist und somit durch das Solarmodul Energieautarkie besteht. Bei alternativen Ausführungsformen ist mit einem Akku oder der Fahrzeugbatterie des Motors des Fahrzeugs mindestens eine weitere Energiequelle zugeschaltet. Das Solarmodul kann das E-Papergerät umrahmen oder neben dem E-Papergerät angeordnet sein und mit ihm über eine Stromverbindung verbunden sein. Die bei bevorzugten Ausführungsformen durch das Solarmodul erreichte Energieautarkie der Vorrichtung ist besonders bei längerem Einsatz der erfindungsgemäßen Vorrichtung vorteilhaft.

Besonders bevorzugte Ausführungsformen umfassen Auswertemittel, die vorzugsweise eine CPU und/oder einen Speicherchip umfassen, wobei die Auswertemittel zudem verschiedene Standardprogramme zur Datenauswertung umfassen können. In bevorzugten Ausführungsformen sind die Auswertemittel ein PC. Die Auswertemittel sind vorzugsweise am oder nahe dem E-Papergerät angeordnet. In alternativen Ausführungsformen sind sie an anderer Stelle am Fahrzeug wie etwa in der Fahrerkabine angebracht oder weder am Fahrzeug noch am Fahrzeuganhänger angebracht und können über eine Distanz hinweg arbeiten, wobei die Verbindung zur Vorrichtung am Fahrzeug und/oder Fahrzeuganhänger über die Funkverbindungseinheit erfolgt. Die Auswertemittel sind in alternativen Ausführungsformen geteilt. Ein Teil der Auswertemittel befinden sich nicht direkt an der erfindungsgemäßen Vorrichtung und arbeitet aus der Distanz. Der verbleibende Teil der Auswertemittel befindet sich beispielsweise am E-Papergerät der erfindungsgemäßen Vorrichtung. Die Auswertemittel umfassen vorzugsweise verschiedene Programme, um Fahrzeuge und/oder Passanten und/oder andere Verkehrsteilnehmer zu analysieren. Die Auswertemittel erhalten Daten und/oder Bilder zur Analyse, die von der Kamera der erfindungsgemäßen Vorrichtung bereitgestellt werden. Die Auswertemittel sind vorzugsweise in der Lage, die Fahrzeuge und/oder Passanten im rückwärtigen Bereich und im Seitenbereich auf Basis der von der Kamera gelieferten Daten und/oder Bildern zahlenmäßig zu erfassen. Die Auswertemittel verfügen vorzugsweise über die Funktion, die Fahrzeugtypen auf Basis der von der Kamera gelieferten Daten und/oder Bildern zu unterscheiden. Beispiele für verschiedene Fahrzeugtypen sind LKWs, SUVs, Kleinbusse, Busse, Motorräder, Coupes, Limousinen, Fahrräder und vergleichbare Fahrzeugtypen.

Ferner umfassen die Auswertemittel bei besonderen Ausführungsformen die Funktion, auf Basis der von der Kamera gelieferten Daten und/oder Bildern nach Fahrzeugmarken wie VW, Toyota oder BMW zu differenzieren, wobei alle weltweit bekannten Fahrzeugmarken unterscheidbar sind.

Ferner umfassen die Auswertemittel bei besonderen Ausführungsformen die Funktion, auf Basis der von der Kamera gelieferten Daten und/oder Bildern nach Fahrzeugmodellen zu differenzieren. Hierzu sind alle bekannten Automodelle wie etwa Golf VII oder Mercedes B-Klasse mit den verschiedenen Baureihen oder BMW 520 in den Auswertemitteln abgespeichert. Ein möglicher Ansatzpunkt für die Differenzierung nach Fahrzeugtypen, Fahrzeugmarken und/oder Fahrzeugmodellen ist die Ermittlung der Fahrzeugsilhouette.

Die Kamera erkennt in weiteren Ausführungsformen in Fahrzeugen, die der erfindungsgemäßen Vorrichtung am nächsten sind, die Zahl der Insassen. Bei stehenden Fahrzeugen im rückwärtigen Bereich können bevorzugte Ausführungsformen auch bei mehr als 10 Fahrzeugen bei guten Sichtverhältnissen die Zahl der Insassen ermitteln, wobei die Zahl der Insassen im ersten Fahrzeug von besonderen Ausführungsformen immer erfasst werden kann. Alternative Ausführungsformen ermitteln zudem im Seitenbereich die Zahl der Insassen in den Fahrzeugen.

Alternative Ausführungsformen der Auswertemittel ermitteln nicht die Zahl der Insassen, sondern nur die Fahrzeugtypen und/oder Fahrzeugmarken und/oder Fahrzeugmodelle. Die Auswerteeinheit ermittelt in diesen Ausführungsformen durch statistische Erfahrungsdaten, die abgespeichert sind, wie viele Insassen die ermittelten Fahrzeuge statistisch gesehen aufweisen, wobei die statistischen Erfassungsdaten je nach Wochentag und/oder Uhrzeit und/oder Wetter variieren können.

Die Auswertemittel können zudem bei bevorzugten Ausführungsformen auf Basis der von der Kamera gelieferten Daten und/oder Bildern zwischen unterschiedlichen Fahrtrichtungen im rückwärtigen und seitlichen Bereichen unterscheiden.

Die angeführten Ausführungsformen und Vorgehensweisen der Auswertemittel sind miteinander kombinierbar und wechselbar, wobei der Wechselvorgang bei bevorzugten Ausführungsformen durch Wechsel eines Softwareprogramms möglich ist. Die Analyse der Auswertemittel wird durch Umschalten des Softwareprogramms in den Auswertemitteln umgeändert, so dass beispielsweise die rein zahlenmäßige Erfassung von Fahrzeugen im rückwärtigen Bereich zugunsten einer Erfassung der Fahrzeuge im Seitenbereich ohne rückwärtigen Raum ausgetauscht wird, wobei im Seitenbereich zusätzlich die Zahl der Fahrzeuginsassen ermittelt wird.

Die Auswerteeinheit umfasst zudem Funktionen, um auf Basis der von der Kamera gelieferten Daten und/oder Bildern die durchschnittliche statistische Aufmerksamkeitslänge von Fahrzeuginsassen und/oder Passanten und/oder weiteren Verkehrsteilnehmern zu ermitteln. Hierzu wird die Standzeit der Fahrzeuge und/oder Passanten und/oder anderen Verkehrsteilnehmer ermittelt. Zudem wird die relative Fahrgeschwindigkeit der Fahrzeuge in Relation zu der Vorrichtung und/oder die Fahrtrichtung der Fahrzeuge bestimmt und/oder die relative Laufgeschwindkeit der Passanten in Relation zu der Vorrichtung und/oder die Laufrichtung der Passanten. Zudem wird die Distanz der Passanten und/oder Fahrzeuge und/oder anderen Verkehrsteilnehmer zu der erfindungsgemäßen Vorrichtung ermittelt. Bei bevorzugten Ausführungsformen wird ermittelt, in welche Richtung die Passanten und/oder Fahrzeuginsassen blicken. Faktoren wie Entfernung zur Vorrichtung, Länge des Blicks zu der Vorrichtung, Lauf- oder Fahrtrichtung oder etwa Standlänge ergeben zusammengerechnet schließlich ein Maß für die Aufmerksamkeitslänge.

Neben Passaten und Fahrzeuginsassen, zu denen auch die Fahrzeugführer gezählt werden, werden weitere Verkehrsteilnehmer erfasst. Zu diesen weiteren Verkehrsteilnehmern zählen z.B. Skateboardfahrer, Inlineskater, Hundeführer sowie Straßenbahnführer und Lokführer, wobei Radfahrer Verkehrsteilnehmer und Fahrzeugführer sind, aber keine Fahrzeuginsassen darstellen.

Passanten und weitere Verkehrsteilnehmer können durch die Auswertemittel nach Alter und/oder Geschlecht differenziert werden. Zu diesem Zweck setzen die Auswertemittel z.B. verschiedene Formen von Gesichtserkennungssoftware ein. Bei weiteren Ausführungsformen umfassen die Auswertemittel eine 3D-Funktion, um die Genauigkeit der Datenauswertung zu erhöhen, vorzugsweise bei der Analyse der Daten der Passanten.

Bei bevorzugten Ausführungsformen sind die elektronischen Komponenten Auswertemittel, Kamera, Funkverbindungseinheit, E-Papergerät mit Display über Verbindungen (Leitungen) untereinander verbunden. Bei weiteren Ausführungsformen der erfindungsgemäßen Vorrichtung sind mehrere Komponenten der erfindungsgemäßen Vorrichtung nicht miteinander direkt verbunden. Die Kommunikation erfolgt in diesen Fällen vornehmlich über die Auswertemittel.

Die erfindungsgemäße Vorrichtung kann verschiedene Programme umfassen, wobei die Programme vorzugsweise den Auswertemitteln zugeordnet sind und eine Steuerung der Vorrichtung erlauben. Bei speziellen Ausführungsprogrammen können externe Programme die Vorrichtung über die Funkverbindungseinheit steuern.

Die erfindungsgemäße Vorrichtung kann verschiedene Programme umfassen, die über Nützung von Netzwerktechnologie, vorzugsweise über das Internet, Datenbanken erstellen und administrieren, über welche verschiedene Arten von Informationen eingebracht und/oder abgerufen werden. Dies können beispielsweise entsprechende Basisinformationen sein, die vom Display angezeigt werden, oder es handelt sich dabei um statistische Informationen der Auswertemittel, die dem Besitzer oder Mieter der Vorrichtung zur Verfügung gestellt werden, oder aber die Programme diesen als Kunden- und Buchungsplattform, auf der aktuelle und mögliche Kunden Informationen zu den Basis- und Zusatzinformationen abrufen oder eingeben.

Die erfindungsgemäße Vorrichtung weist bei alternativen Ausführungsformen eine gesonderte Datenspeichereinheit auf, die es erlaubt, umfangreiche Mengen an Basisinformationen zu speichern. Die Basisinformationen sind vorzugsweise klassifiziert. Die Basisinformationen werden vorzugsweise nach Regionen bzw. GPS-Signalen klassifiziert, wobei eine Basisinformation beispielsweise durch Meldung eines GPS-Signals durch das Navigationssystem aufgerufen und angezeigt wird. Die Datenspeichereinheit kann derart viele Basisinformation abspeichern, dass in Millionenstädten in jeder Straße eine andere Basisinformation anzeigbar ist.

Die Funkverbindungseinheit erlaubt das Senden und Empfangen von Befehlen und Daten. Die Funkverbindungseinheit kann bei besonderen Ausführungsformen die Verbindung zwischen Kamera und Auswertemitteln darstellen. Ferner kann die Funkverbindungseinheit die Steuerung der Vorrichtung aus der Distanz erlauben, wobei die Steuerung durch ein Programm und/oder durch eine menschliche Bedienperson erfolgen kann.

Bevorzugte Ausführungsformen umfassen Befestigungsmittel zur Befestigung der erfindungsgemäßen Vorrichtung. Die Befestigungsmittel erlauben die Befestigung der erfindungsgemäßen Vorrichtung an einem Fahrzeug oder einem Fahrzeuganhänger oder an einem unbewegten Standort, wobei das Fahrzeug ein PKW, Kleinbus, BUS, LKW, Straßenbahn, U-Bahn, Bahn oder etwas Vergleichbares sein kann und der Fahrzeuganhänger ein PKW-Anhänger, LKW-Anhänger, Eisenbahnanhänger oder etwas Vergleichbares sein kann und der unbewegte Standort ein Gebäude, eine eigens für die Vorrichtung errichtete Befestigungsvorrichtung oder etwas Vergleichbares sein kann. Die Befestigungsmittel können Schienen mit Klammern, magnetische Vorrichtungen, Schrauben, Klemmvorrichtungen oder Vergleichbares umfassen. Die Befestigungsmittel lassen sich präzise an die erfindungsgemäße Vorrichtung, speziell an die Größe der Anzeige des Displays des E-Papers, anpassen.

Spezielle Ausführungsformen der erfindungsgemäßen Vorrichtung umfassen einen wetterbeständigen Rahmen, der vorzugsweise das Display zum Anzeigen der Basisinformationen (wetterfest) umschließt. Bevorzugte Ausführungsformen umfassen einen wetterbeständigen Rahmen, der alle Komponenten der Vorrichtung (wetterfest) umschließt.

Spezielle Ausführungsformen der erfindungsgemäßen Vorrichtung umfassen eine selbstständige aktive Steuerung, die im Falle von - aber nicht einschränkend auf - Gefahren- und/oder besonderen Verkehrssituationen spezielle Basisinformationen und/oder spezielle, der aktuellen Situation angepasste, (Zusatz-) Informationen, wie zum Beispiel Stauhinweis(e), das vorgeschriebene Bilden einer Rettungsgasse, Glatteiswarnung, Unfallwarnung(en), anzeigen. Bevorzugte Ausführungsformen umfassen eine selbstständige aktive Steuerung, die im Falle von - aber nicht einschränkend auf - einem Ausfall der Funkverbindungseinheit oder der Funkverbindung, selbstständig Basisinformationen anzeigt.

Spezielle Ausführungsformen der erfindungsgemäßen Vorrichtung umfassen aktive Anzeigeelemente, vorzugsweise basierend auf LED-, OLED- und AMOLED-basierter Displaytechnologie, die im Falle von - aber nicht einschränkend auf - Dunkelheit, Tunneldurchfahrt(en), schlechter Witterung die Basisinformationen anzeigen. Bevorzugte Ausführungsformen umfassen aktive Anzeigeelemente, die im Falle von - aber nicht einschränkend auf - Dunkelheit, Tunneldurchfahrt(en), schlechter Witterung die Basisinformationen und/oder spezielle, der aktuellen Situation angepasste, (Zusatz-) Informationen, wie zum Beispiel Stauhinweis(e), das vorgeschriebene Bilden einer Rettungsgasse, Glatteiswarnung, Unfallwarnung(en), anzeigen.

Spezielle Ausführungsformen der erfindungsgemäßen Vorrichtung umfassen ein automatisches temperaturgesteuertes Heizsystem, das im Falle von - aber nicht einschränkend auf - kühlen und/oder kalten Temperaturen, eine einwandfreie und durchgehende Funktionalität der Vorrichtung unterstützt.

Spezielle Ausführungsformen der erfindungsgemäßen Vorrichtung umfassen eine automatische Reinigungsvorrichtung, die im Falle von - aber nicht einschränkend auf - Verschmutzung der Anzeige, diese reinigt.

Mit der erfindungsgemäßen Vorrichtung lassen sich verschiedene Verfahren durchführen, wobei die nachfolgenden Verfahren nicht abschließend sind. Die Verfahren lassen sich beliebig miteinander kombinieren.

Verfahren a): Mit bevorzugten Ausführungsformen der erfindungsgemäßen Vorrichtung lässt sich ein Verfahren durchführen, bei dem zunächst ein erstes Navigationssignal, vorzugsweise ein GPS-Signal, der Navigationseinheit von der Auswerteeinheit analysiert wird. In einem nächsten Schritt wird auf Basis des detektierten Navigationssignals eine Basisinformation von den Auswertemitteln ausgewählt. Diese Basisinformation wurde vorher einem bestimmten Navigationssignal zugeordnet. Wenn sich das Navigationssignal der Navigationseinheit durch das Fahren des Fahrzeugs, an dem sich die erfindungsgemäße Vorrichtung befindet, ändert, überprüfen die Auswertemittel, ob das neue zweite Navigationssignal noch der auf dem Display angezeigten Basisinformation entspricht. Wenn dem zweiten Navigationssignal, das von der Navigationseinheit gesendet wird, eine andere Basisinformation zugeordnet ist, werden auf dem Display des E-Papers die angezeigten Basisinformationen ausgetauscht. Während der vorgenannten Schrittabfolge sammelt die Kamera Daten und/oder Bilder und liefert diese Bilder an die Auswertemittel, die die Daten z.B. im Hinblick auf Fahrzeuginsassen und deren Blickrichtung analysiert.

Verfahren b): Mit bevorzugten Ausführungsformen der erfindungsgemäßen Vorrichtung lässt sich ein Verfahren durchführen, bei dem zunächst die Auswertemittel auf Basis der Daten der Kamera die im seitlichen Bereich neben der Vorrichtung befindlichen Fahrzeuge ermittelt und/oder die im seitlichen Bereich befindliche Zahl an Passanten ermittelt und/oder die im rückwärtigen Raum hinter dem Fahrzeug, an dem die erfindungsgemäße Vorrichtung montiert ist, befindliche Fahrzeugzahl ermittelt und/oder die im rückwärtigen Raum befindlichen Passantenzahl ermittelt. Die Auswertemittel der erfindungsgemäßen Vorrichtung analysiert die Zahl der Fahrzeuge und/oder Passantenzahl und wählt anhand der Höhe der Zahl der Fahrzeuge und/oder Passanten Basisinformation aus, die auf dem Display angezeigt werden. Wenn sich die Zahl der ermittelten Passanten und/oder ermittelten Fahrzeuge verändert, beispielsweise reduziert, werden durch die Auswertemittel andere Basisinformation ausgewählt, die auf dem Display angezeigt werden. Die Auswertemittel speichert die Aufmerksamkeitsintensität der Umgebung (z.B. in Form der Passantenzahl mit Blickrichtung auf die erfindungsgemäße Vorrichtung) ab und ordnet diesen Wert dem Navigationssignal der Navigationseinheit zu, so dass bei späteren Fahrten in dem gleichen Gebiet bereits ein Datenfundus z.B. über die Passantenzahlen über dieses Gebiet besteht. Auf diese Weise lassen sich Fahrtrouten optimieren bzw. neu zusammenstellen.

Bei besonders bevorzugten Ausführungsformen werden Mischformen der obigen Verfahren a) und Verfahren b) eingesetzt. Hierzu werden bei bestimmten Navigationssignalen vordefinierte Basisinformationen ausgewählt, wobei bei besonders hohen Passantenzahlen und/oder Fahrzeugzahlen die Priorität einer Basisinformation bei einem vordefinierten Navigationssignal aufgehoben wird. In diesem Fall wählen die Auswertemittel eine Basisinformation für besonders hohe Passanten und/oder Fahrzeugzahlen aus.

Verfahren c): Bei einem weiteren Verfahren werden die Basisinformationen auf der Grundlage von Navigationssignalen ausgewählt, wobei die Basisinformationen vordefinierten Navigationssignalen zugeordnet sind. In einem nächsten Schritt werden die Passantenzahlen im seitlichen und/oder rückwärtigen Raum ermittelt, während bestimmte Basisinformationen angezeigt wurden. Die ermittelten Passantenzahlen und/oder Fahrzeugzahlen und/oder andere Maße für die Aufmerksamkeit der Umgebung informieren den Benutzer der Vorrichtung präzise über die Wirkung/Wirkreichweite/Zahl der erreichten Personen der Basisinformation. Die ermittelten Passantenzahlen und/oder Fahrzeugzahlen sind mit einer bestimmten Kostenkategorie korreliert, die dem Auftraggeber für das Anzeigen der Basisinformation präzise in Rechnung gestellt werden können.

Bevorzugte Ausführungsformen umfassen eine Navigationseinheit.

Spezielle Ausführungsformen umfassen Auswertemittel, die geeignet sind, die Zahl von Fahrzeugen und/oder Passanten und/oder weiteren Verkehrsteilnehmern zu ermitteln.

Bei speziellen Ausführungsformen sind die Auswertemittel geeignet, die Basisinformationen selbständig auszuwählen.

Spezielle Ausführungsformen umfassen Auswertemittel, die geeignet sind, Fahrzeuge nach Typen und/oder Marken und/oder Fahrzeugmodellen zu klassifizieren und/oder Passanten nach Geschlecht und/oder Alter zu klassifizieren.

Spezielle Ausführungsformen umfassen Auswertemittel, die eine 3D-Funktion umfassen und hierdurch die Fahrzeuge und/oder Passanten und/oder anderen Verkehrsteilnehmer dreidimensional erfassbar sind.

Spezielle Ausführungsformen der erfindungsgemäßen Vorrichtung sind dazu geeignet, die durchschnittliche statistische Aufmerksamkeitslänge der Fahrzeuginsassen oder Passanten in Abhängigkeit von Standzeit und/oder Fahrgeschwindigkeit in Relation zur Vorrichtung und/oder Fahrtrichtung in Relation zur Vorrichtung und/oder Entfernung der Fahrzeuge zur Vorrichtung zu bestimmen.

Bei speziellen Ausführungsformen erfasst die Kamera das Umfeld horizontal in einem Gradwinkel von mindestens 180 Grad, vorzugsweise 270 Grad, besonders bevorzugt 360 Grad.

Bei speziellen Ausführungsformen ist die Vorrichtung über die Funkverbindungseinheit von einem externen Programm steuerbar und/oder über die Funkverbindungseinheit von einer Bedienperson steuerbar.

Bei bevorzugten Ausführungsformen sind die Basisinformationen in Abhängigkeit vom Signal des Navigationssystems, das vorzugsweise GPS-basiert ist, anzeigbar.

Bei alternativen Ausführungsformen ist das mindestens eine Display in Kompartimente unterteilbar, mit denen unterschiedliche Basisinformationen anzeigbar sind.

Bei alternativen Ausführungsformen umfasst die Vorrichtung ein Solarmodul.

Bei speziellen Ausführungsformen ist das mindestens eine Display zum Anzeigen von Basisinformation farbig oder schwarzweiß ist.

Bei speziellen Ausführungsformen umfasst die erfindungsgemäße Vorrichtung einen wetterbeständigen Rahmen, der das Display und vorzugsweise alle Komponenten umschließt.

Bei speziellen Ausführungsformen umfasst die erfindungsgemäße Vorrichtung Befestigungsmittel zur Befestigung auf den Seitenflächen eines Fahrzeugs und/oder der Rückseite eines Fahrzeugs und/oder den Seitenflächen eines Fahrzeuganhängers und/oder der Rückseite eines Fahrzeuganhängers.

Mit der erfindungsgemäßen Vorrichtung lässt sich ein Verfahren zur Ermittlung der Weitergabe von Basisinformationen durchführen, wobei
eine Navigationseinheit ein Signal sendet,
die Auswertemittel dieses Signal analysieren,
eine Anzeigefläche für Basisinformationen mit mindestens einem auf E-Paper basierenden

Display Basisinformationen in Abhängigkeit vom Signal der Navigationseinheit anzeigt, die Kamera die Zahl von Fahrzeugen und/oder Passanten und/oder weiteren

Verkehrsteilnehmern ermittelt.
Figur 1 zeigt eine Schemazeichnung einer Ausführungsform der erfindungsgemäßen Vorrichtung mit Solarmodul.
Figur 2 zeigt eine Schemazeichnung einer Ausführungsform der erfindungsgemäßen Vorrichtung mit kompartimentiertem Display.
Figur 3 zeigt eine Aufsicht auf Fahrzeug mit Anhänger, bei dem im Seitenbereich und an der Rückwand des Anhängers mehrere erfindungsgemäße Vorrichtungen angeordnet sind.
Figur 4 zeigt eine Darstellung der Schrittabfolge eines Verfahrens nach dem Gegenstand der Erfindung.

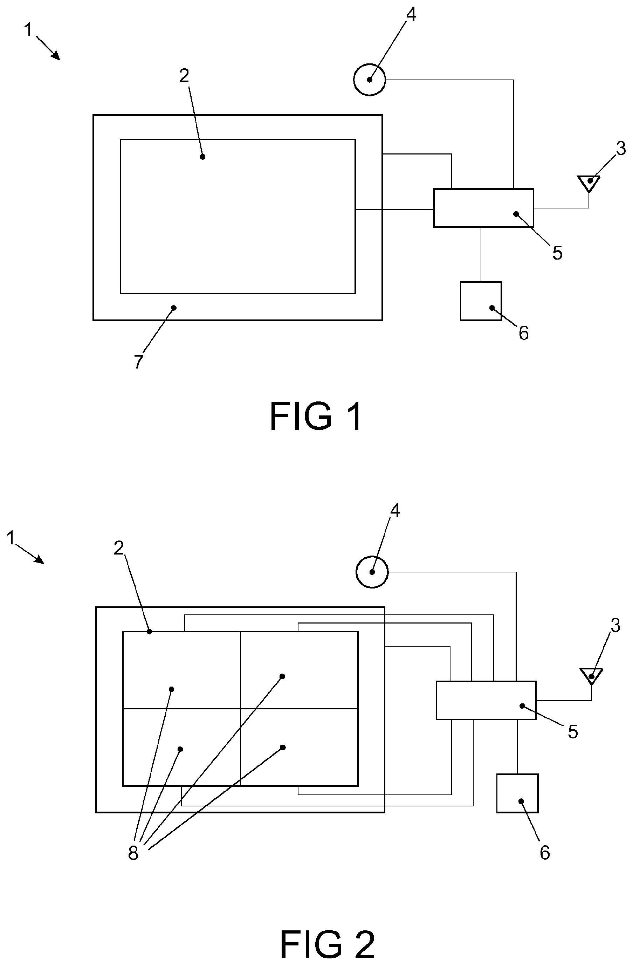

Figur 1 zeigt in einer schematischen Übersichtszeichnung eine bevorzugte Ausführungsform der erfindungsgemäßen Vorrichtung 1, umfassend eine Anzeigefläche für Basisinformationen mit einem auf E-Paper basierenden Display 2, eine Funkverbindungseinheit 3, eine Kamera 4 und Auswertemittel 5. Die verschiedenen Komponenten stehen über elektrische Leitungen miteinander in Verbindung. Ferner umfasst die Vorrichtung eine Navigationseinheit 6 und ein Solarmodul 7, durch die die Vorrichtung 1 in Figur 1 energieautark ist, was besonders bei längerem Einsatz von Vorteil ist. Verschiedene Verfahren sind mit der Vorrichtung gemäß Figur 1 durchführbar. In einem ersten möglichen Verfahren sendet die Navigationseinheit 6 ein Signal an die Auswertemittel 5. Die Auswertemittel 5 wählen anhand des Navigationssignals 6 Basisinformationen aus, die auf dem Display 2 angezeigt werden. Die Kamera 4 sendet Bildinformationen und/oder Daten an die Auswertemittel 5, die auf Basis der Daten und/oder Bildinformationen die Zahl und/oder die Aufmerksamkeitsintensitäten der Fahrzeuginsassen und/oder Passanten ermitteln. Ein weiteres mögliches Verfahren besteht darin, dass die Kamera 4 zunächst die Zahl der Passanten und/oder Fahrzeuginsassen sowie deren Aufmerksamkeitsintensitäten feststellt. In einem zweiten Schritt wird dann die Basisinformation für dieses Umfeld ausgewählt. Die Navigationseinheit 6 speichert für dieses Umfeld Navigationskoordinaten ab. Die in Figur 1 dargestellte Funkverbindungseinheit 3 ermöglicht die Fernsteuerung der in Figur 1 dargestellten Vorrichtung 1. Über die Funkverbindungseinheit 3 kann eine Bedienperson oder ein externes Programm die Vorrichtung 1 steuern und die Auswertemittel 5 beeinflussen.

Figur 2 entspricht im Wesentlichen vom Aufbau der in Figur 1 dargestellten Vorrichtung 1. Das auf E-Paper basierende Display 2 ist in Figur 2 jedoch kompartimentiert beziehungsweise unterteilt. In den einzelnen Kompartimenten 8 können unterschiedliche Basisinformationen angezeigt werden. Die vier dargestellten Kompartimente 8 ermöglichen somit eine weitere Flexibilisierung der erfindungsgemäßen Vorrichtung 1.

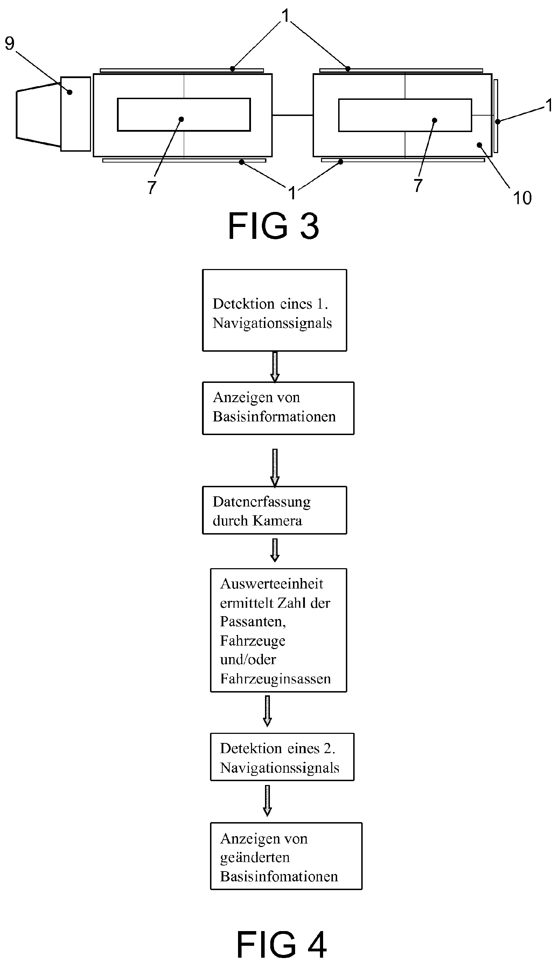

Figur 3 zeigt in einer Aufsicht auf die erfindungsgemäße Vorrichtung 1, wie sie in mehrfacher Form auf den Seitenflächen eines Fahrzeugs 9 (LKWs) und wie sie in mehrfacher Form auf den Seitenflächen und auf der der Rückseite eines Fahrzeuganhängers 10 befestigt ist. Auf dem Dach des Fahrzeugs 9 und des Fahrzeuganhängers 10 befindet sich jeweils ein Solarmodul 7. Durch die insgesamt fünf erfindungsgemäßen Vorrichtungen 1 gemäß Figur 3 ist es möglich, verschiedene Basisinformationen an dem Fahrzeug 9 und dem Fahrzeuganhänger 10 anzuzeigen. Die Kameras (nicht eingezeichnet) der fünf erfindungsgemäßen Vorrichtungen 1 erlauben eine präzise Ermittlung von Passanten-, Fahrzeug- und Fahrzeuginsassenzahlen, sowie bei entsprechender Einstellung der Auswertemittel 5 die Ermittlung der Aufmerksamkeitsintensitäten durch verschiedene Faktoren wie Blickrichtung, Lauf- und/oder Fahrgeschwindigkeit.

Figur 4 zeigt in einer schematischen Zeichnung mögliche Schrittabfolgen beim Gebrauch der erfindungsgemäßen Vorrichtung 1. In einem ersten Schritt wird ein Navigationssignal detektiert, das sich laufend ändert weil die erfindungsgemäße Vorrichtung 1 auf einem Fahrzeug befestigt ist und sich mit diesem fortbewegt. Die Auswertemittel 5 vergleichen dieses Navigationssignal mit abgespeicherten Daten. Bei einer Übereinstimmung zwischen den abgespeicherten Daten und dem Navigationssignal werden ausgesuchte Basisinformationen auf dem Display 2 angezeigt. In einem nächsten Verfahrensschritt erfasst die Kamera 4 der Vorrichtung 1 Bildinformationen und/oder Daten von Fahrzeugen, Fahrzeuginsassen und/oder Passanten. Die Auswertemittel 5 analysieren diese Bildinformationen oder Daten und speichern sie ab. Wenn sich das Fahrzeug bewegt, führt dies nach einer gewissen Strecke zu der Detektion eines 2. Navigationssignals. Die Auswertemittel 5 vergleichen wiederum dieses 2. Navigationssignal mit abgespeicherten Daten. Wenn diesem 2. Navigationssignal andere Basisinformationen zugeordnet sind, ändern sich die auf dem Display 2 angezeigten Basisinformationen entsprechend.

Als eigens für die Vorrichtung errichtete Befestigungsvorrichtung wird beispielsweise eine Ständerkonstruktion aus Metall oder anderen Werkstoffen verstanden, die beispielsweise am Straßenrand oder über der Straße oder an anderen Orten angebracht sein kann und zum Tragen einer erfindungsgemäßen Vorrichtung ausgebildet ist.

Es kann erwähnt werden, dass "Anbringung an einem Fahrzeug" auch dahingehend zu verstehen ist, dass die erfindungsgemäße Vorrichtung in einem Fahrzeug, beispielsweise hinter der Scheibe eines Busses angebracht wird.

### Bezugszeichenliste:

- 1: Vorrichtung zur Ermittlung der Weitergabe von Basisinformationen
- 2: Auf E-Paper basierendes Display
- 3: Funkverbindungseinheit
- 4: Kamera
- 5: Auswertemittel
- 6: Navigationseinheit
- 7: Solarmodul
- 8: Kompartimente des auf E-Paper basierenden Displays
- 9: Fahrzeug
- 10: Fahrzeuganhänger

## Patentansprüche

1. Vorrichtung (1) zur Ermittlung der Weitergabe von Basisinformationen, umfassend eine Anzeigefläche für Basisinformationen mit mindestens einem auf vorzugsweise E-Paper basierenden Display (2), eine Funkverbindungseinheit (3), wobei die Vorrichtung (1) auf Fahrzeugen (9) und/oder Fahrzeuganhängern (10) und/oder anderen unbewegten Standorten, vorzugsweise Gebäuden oder eigens für die Vorrichtung errichteten Befestigungsvorrichtungen, befestigbar ist, **dadurch gekennzeichnet,**
**dass** die Vorrichtung (1) mindestens eine Kamera (4) zum Ermitteln einer Bildinformation umfasst.

2. Vorrichtung (1) gemäß Anspruch 1, **dadurch gekennzeichnet, dass** die Vorrichtung (1) eine Navigationseinheit (6) umfasst.

3. Vorrichtung (1) gemäß Anspruch 1 oder 2, **dadurch gekennzeichnet, dass** die Vorrichtung (1) Auswertemittel (5) zum Auswerten der Bildinformation umfasst, die geeignet sind, eine Anzahl von Fahrzeugen und/oder Passanten und/oder weiteren Verkehrsteilnehmern in der Bildinformation zu ermitteln.

4. Vorrichtung (1) gemäß einem der Ansprüche 1 bis 3, **dadurch gekennzeichnet, dass** die Auswertemittel (5) geeignet sind Basisinformationen zum Anzeigen mit der Anzeigefläche selbständig auszuwählen.

5. Vorrichtung (1) gemäß einem der Ansprüche 1 bis 4, **dadurch gekennzeichnet, dass** die Auswertemittel (5) geeignet sind Fahrzeuge nach Typen und/oder Marken und/oder Fahrzeugmodellen zu klassifizieren und/oder Passanten nach Geschlecht und/oder Alter zu klassifizieren.

6. Vorrichtung (1) gemäß einem der Ansprüche 1 bis 5, **dadurch gekennzeichnet, dass** die Auswertemittel (5) geeignet sind die durchschnittliche statistische Aufmerksamkeitslänge der Fahrzeuginsassen oder Passanten in Abhängigkeit von einer Standzeit und/oder Fahrgeschwindigkeit in Relation zur Vorrichtung und/oder Fahrtrichtung in Relation zur Vorrichtung (1) und/oder Entfernung der Fahrzeuge zur Vorrichtung (1) zu bestimmen.

7. Vorrichtung (1) gemäß einem der Ansprüche 1 bis 6, **dadurch gekennzeichnet, dass** die Kamera (4) das Umfeld horizontal in einem Gradwinkel von mindestens 180 Grad, vorzugsweise 270 Grad, besonders bevorzugt 360 Grad, erfasst.

8. Vorrichtung (1) gemäß einem der Ansprüche 1 bis 7, **dadurch gekennzeichnet, dass** die Vorrichtung (1) über die Funkverbindungseinheit (3) von einem entfernten Computer steuerbar ist und/oder über die Funkverbindungseinheit (3) von einer Bedienperson steuerbar ist.

9. Vorrichtung (1) gemäß einem der Ansprüche 1 bis 8, **dadurch gekennzeichnet, dass** Basisinformationen in Abhängigkeit vom Signal des Navigationssystems (6), das vorzugsweise GPS-basiert ist, anzeigbar sind.

10. Vorrichtung (1) gemäß einem der Ansprüche 1 bis 9, **dadurch gekennzeichnet, dass** das mindestens eine Display (2) in Kompartimente (8) unterteilbar ist, mit denen unterschiedliche Basisinformationen anzeigbar sind.

11. Vorrichtung (1) gemäß einem der Ansprüche 1 bis 10, **dadurch gekennzeichnet, dass** die Vorrichtung (1) ein Solarmodul (7) umfasst.

12. Vorrichtung (1) gemäß einem der Ansprüche 1 bis 11, **dadurch gekennzeichnet, dass** das mindestens eine auf E-Paper oder jeder vergleichbaren bekannten Technologie basierende Display (2) zum Anzeigen von farbigen oder schwarzweißen Basisinformationen ausgebildet ist.

13. Vorrichtung (1) gemäß einem der Ansprüche 1 bis 12, **dadurch gekennzeichnet, dass** die Vorrichtung (1) einen wetterbeständigen Rahmen umfasst, der das Display (2) und vorzugsweise alle Komponenten (8) umschließt.

14. Vorrichtung (1) gemäß einem der Ansprüche 1 bis 13, **dadurch gekennzeichnet, dass** die Vorrichtung (1) Befestigungsmittel zur Befestigung an den Seitenflächen eines Fahrzeugs (9) und/oder der Rückseite eines Fahrzeugs (9) und/oder den Seitenflächen eines Fahrzeuganhängers (10) und/oder der Rückseite eines Fahrzeuganhängers (10) und/oder an beliebeigen Flächen anderer unbewegter Standorte, vorzugsweise Gebäude oder eigens für die Vorrichtung errichtete Befestigungsvorrichtungen, umfasst.

15. Verfahren zur Ermittlung der Weitergabe von Basisinformationen durchführen, wobei eine Navigationseinheit (6) ein Signal sendet,
die Auswertemittel (5) dieses Signal analysieren,
eine Anzeigefläche für Basisinformationen mit mindestens einem auf E-Paper basierenden
Display (2) Basisinformationen in Abhängigkeit vom Signal der Navigationseinheit (6) anzeigt,
die Kamera (4) die Zahl von Fahrzeugen und/oder Passanten und/oder weiteren Verkehrsteilnehmern ermittelt.
